# EUROPÄISCHE PATENTSCHRIFT

(11) **EP 1 457 379 B1**
(45) Veröffentlichungstag und Bekanntmachung des Hinweises auf die Patenterteilung: **01.09.2010**
(21) Anmeldenummer: 03023940.4
(22) Anmeldetag: 22.10.2003
(51) Int. Cl.: B60K 31/00

(54) **Verfahren und Vorrichtung zur Geschwindigkeitsregelung eines Kraftfahrzeugs**
Method and apparatus for vehicle cruise control
Procédé et dispositif pour la régulation de la vitesse d'un véhicule

(30) Priorität: 10.03.2003 DE 10310720
(43) Veröffentlichungstag der Anmeldung: 15.09.2004
(73) Patentinhaber: ROBERT BOSCH GMBH, 70442 Stuttgart (DE)
(72) Erfinder: Leineweber, Thilo, 70174 Stuttgart (DE); Stamm, Axel, 70499 Stuttgart (DE); Dorenkamp, Stephan, 72760 Reutlingen (DE)

(56) Entgegenhaltungen:
- EP-A- 1 063 626
- EP-A- 1 209 649
- DE-A1- 10 029 842
- US-A- 4 853 720
- US-A- 5 594 645
- US-A- 2002 121 398
- US-B1- 6 273 204

## Beschreibung

### Verfahren und Vorrichtung zur Geschwindigkeitsregelung eines Kraftfahrzeugs

Die vorliegende Erfindung betrifft ein Verfahren und eine Vorrichtung zur Geschwindigkeitsregelung eines Kraftfahrzeugs, bei dem die Geschwindigkeit im Sinne einer Konstantabstandsregelung arbeitet, falls mittels eines Radarsensors mindestens ein vorherfahrendes Fahrzeug detektiert wurde oder die Geschwindigkeitsregelung im Sinne einer Konstantgeschwindigkeitsregelung arbeitet, falls mittels eines Radarsensors kein vorherfahrendes Fahrzeug detektiert wurde, wobei der Abstand zum vorherfahrenden Fahrzeug in Form einer Zeitlücke durch den Fahrer einstellbar ist. Bei Veränderung der Zeitlücke durch den Fahrer die Längsdynamik der Geschwindigkeitsregelung verändert.

### Stand der Technik

Aus der Veröffentlichung "adaptive cruise control system aspects and development trends" von Winner, Witte, Uhler und Lichtenberg, erschienen auf der SAE International Congress & Exposition, Detroit, 26.-29. Februar 1996, ist ein adaptiver Geschwindigkeitsregler bekannt, der Radarstrahlung aussendet und anhand der reflektierten und empfangenen Teilwellen vorherfahrende Fahrzeuge erkennt. Erkennt dieser adaptive Geschwindigkeitsregler ein vorherfahrendes Fahrzeug, so wird die Geschwindigkeit des Fahrzeugs im Sinne einer Konstantabstandsregelung geregelt und dem vorherfahrenden Fahrzeug gefolgt. Erkennt der Radarsensor, dass kein vorherfahrendes Fahrzeug vorhanden ist, so regelt der Geschwindigkeitsregler die Geschwindigkeit des Fahrzeugs im Sinne einer Konstantgeschwindigkeitsregelung auf eine vom Fahrer eingegebene Setzgeschwindigkeit. Weiterhin ist beschrieben, dass der Abstand des Fahrzeugs zum vorausfahrenden Fahrzeug in Form einer Zeitlücke einstellbar ist. Die Zeitlücke stellt hierbei den Zeitraum dar, den das eigene Fahrzeug benötigt, um den Zwischenfahrzeugabstand zurückzulegen. Hierdurch ergibt sich ein geschwindigkeitsabhängiger Raumabstand, der dem natürlichen Fahrverhalten eines menschlichen Fahrers nachempfunden ist.

Aus der US 6,273,204 B1 ist ein Verfahren und eine Steuerung der Fahrgeschwindigkeit eines Fahrzeugs bekannt. Dabei wird die Begrenzung der Geschwindigkeitsänderung des Fahrzeugs, die abhängig von dem von Fahrer gewünschten dynamischen Verhalten des Fahrzeugs ist, aufgehoben beziehungsweise auf höhere Werte gesetzt. Insbesondere ist die eingestellte Zeitlücke über ein Bedienelement des Geschwindigkeitsreglers in Abhängigkeit des vom Fahrer gewünschten Dynamikverhaltens veränderbar. Die Sollgeschwindigkeit wird dabei abhängig von dem Betätigungszustand des Bedienelements in einer Auswahlstufe bestimmt.

In der US 2002/0121398 A1 ist eine Geschwindigkeitsregelvorrichtung für ein Fahrzeug offenbart. Dabei ist die Geschwindigkeitsregelvorrichtung in der Lage, einen Fahrmodus zwischen einer Geschwindigkeitsregelung mit einer konstanten Fahrzeuggeschwindigkeit und einer Geschwindigkeitsregelung zu schalten, die mit einer Fahrzeug-zu-Fahrzeug Abstandsregelfunktion ausgestattet ist, um den Abstand zum vorausfahrenden Fahrzeug zu regeln und somit eine Konstantfahrzeuggeschwindigkeitsfahrt durchzuführen. Der Fahrzeug-zu-Fahrzeug Abstand kann entweder auf einen "langen", einen "mittleren" oder einen "kurzen" Abstand eingestellt werden und durch eine Fahrzeugfolge repräsentiert sein.

### Kern und Vorteile der Erfindung

Der Kern der vorliegenden Erfindung ist es, das Fahrverhalten des Geschwindigkeitsreglers in Abhängigkeit der Zeitlückeneinstellung zu verändern. Fahrer die gerne einen sportlichen Fahrstil bevorzugen, wählen eine kürzere Zeitlücke gegenüber Fahrern, die gerne komfortable und sicherheitsbewusster fahren, die demgegenüber größere Zeitlücken wählen. Fahrer, die gerne sportlich fahren und demgemäss eine kürzere Zeitlücke wählen, bevorzugen auch ein dynamischeres Fahrverhalten des Geschwindigkeitsreglers. Erfindungsgemäß wird dieses durch die Merkmale der unabhängigen Ansprüche gelöst. Insbesondere die Verstellung der Längsdynamik des Fahrzeugs in Abhängigkeit der gewählten Zeitlücke ermöglicht es dem Fahrer, auf einfache und nächvollziehbare Weise einen Fahrstil zu wählen, der dem eigenen Fahrstil ohne Abstandsregelung entsprechen würde.

Vorteilhafte Weiterbildungen und Ausgestaltungen ergeben sich aus den Unteransprüchen.

Vorteilhafterweise wird durch die Auswahl und Veränderung der Zeitlücke ein unterschiedliches Fahrprogramm gewählt.

Weiterhin ist es vorteilhaft, dass bei einer Verringerung der Zeitlücke die vom Geschwindigkeitsregelsystem durchführbare, maximal mögliche Fahrzeugbeschleunigung und/oder Fahrzeugverzögerung erhöht wird. Hierdurch wird erreicht, dass bei einem geringen Zeitlückenabstand das Fahrzeug auch in der Lage ist, stärker zu beschleunigen oder stärker zu verzögern, als bei größeren Zeitlücken.

Weiterhin ist es vorteilhaft, dass bei einer Verringerung der Zeitlücke die Aktivierung der Verzögerungseinrichtungen des Fahrzeugs erst bei einem geringeren Abstand zum vorausfahrenden Fahrzeug erfolgt. Durch diesen Vorteil wird ein dynamischerer Fahrstil erreicht, sofern der Fahrer eine kürzere Zeitlücke gewählt hat, was seinem sportlichen Fahrerwunsch entspricht.

Von besonderer Bedeutung ist die Realisierung des erfindungsgemäßen Verfahrens in der Form eines Steuerelements, das für ein Steuergerät einer adaptiven Abstands- bzw. Geschwindigkeitsregelung eines Kraftfahrzeugs vorgesehen ist. Dabei ist auf dem Steuerelement ein Programm gespeichert, das auf einem Rechengerät, insbesondere auf einem Mikroprozessor oder Signalprozessor ablauffähig und zur Ausführung des erfindungsgemäßen Verfahrens geeignet ist. In diesem Fall wird also die Erfindung durch ein auf dem Steuerelement abgespeichertes Programm realisiert, so dass dieses mit dem Programm versehene Steuerelement in gleicher Weise die Erfindung darstellt, wie das Verfahren, zu dessen Ausführung das Programm geeignet ist. Als Steuerelement kann insbesondere ein elektrisches Speichermedium zur Anwendung kommen, beispielsweise ein Read-Only-Memory.

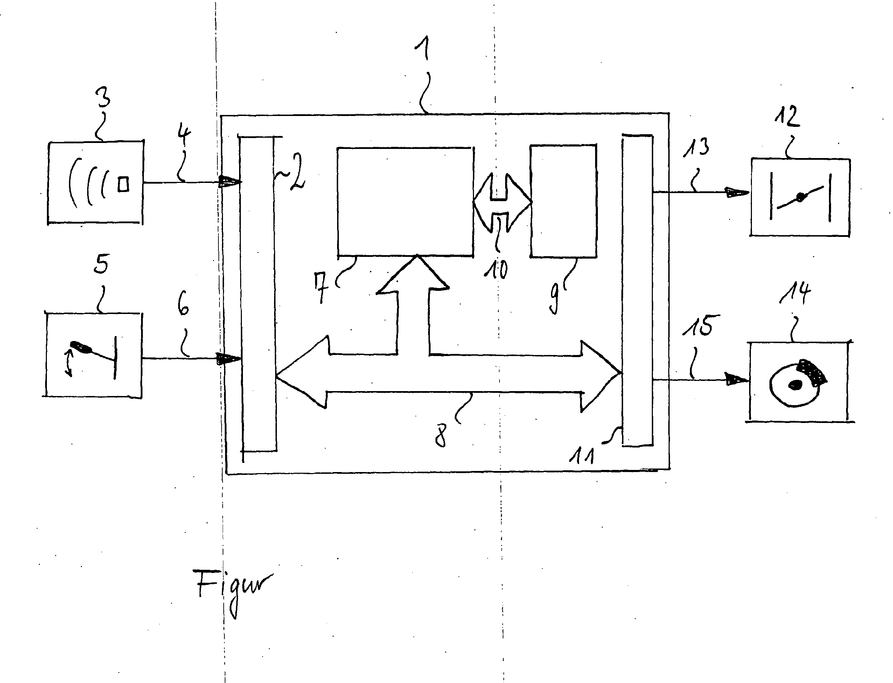

Weitere Merkmale, Anwendungsmöglichkeiten und Vorteile der Erfindung ergeben sich aus der nachfolgenden Beschreibung eines Ausführungsbeispiels der Erfindung, das in den Figuren der Zeichnung dargestellt ist. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung, sowie unabhängig von ihrer Formulierung bzw. Darstellung in der Beschreibung bzw. in den Zeichnungen.

### Zeichnungen

Nachfolgend wird ein Ausführungsbeispiel der Erfindung anhand einer Zeichnung erläutert. Die Figur zeigt ein Blockschaltbild eines Ausführungsbeispiels der erfindungsgemäßen Vorrichtung.

### Beschreibung eines Ausführungsbeispiels

Die Figur zeigt eine Geschwindigkeitsregelvorrichtung 1, die unter anderem eine Eingangsschaltung 2 aufweist. Mittels der Eingangsschaltung 2 werden der Geschwindigkeitsregelvorrichtung 1 Eingangssignale zugeführt. So werden der Eingangsschaltung 2 Objektdaten 4 zugeführt, die von einer Sende- und Empfangseinrichtung für Radarstrahlung 3 bereitgestellt werden. Die Sende- und Empfangseinrichtung für Radarstrahlung 3 sendet Radarsignale aus, die an Objekten am Fahrbahnrand und an vorherfahrenden Fahrzeugen reflektiert werden. Die reflektierten und empfangenen Radarteilwellen, werden in der Sende- und Empfangseinrichtung 3 ausgewertet. Als Objektdaten 4 werden von dieser Sende- und Empfangseinrichtung 3 mindestens der Abstand erkannter Objekte, die Relativgeschwindigkeit der erkannten Objekte sowie der Azimutwinkel der erkannten Objekte der Eingangsschaltung 2 zugeführt. Weiterhin werden der Eingangsschaltung 2 Bediensignale 6 zugeführt, die von einer Bedieneinrichtung 5 erzeugt werden. Die Bedieneinrichtung 5 umfasst Bedien- und Steuereinrichtungen, die der Fahrer des Kraftfahrzeugs betätigt, um den adaptiven Geschwindigkeitsregler in Betrieb zu nehmen sowie dessen Funktionseinstellungen auszuwählen. Durch das Bedienelement 5 ist es dem Fahrer unter anderem möglich, eine Zeitlücke vorzugeben, die dem Abstand des eigenen Fahrzeugs zu einem vorausfahrenden Fahrzeug, hinter dem gefolgt werden soll, entspricht. Die mittels der Eingangsschaltung 2 empfangenen Signale werden über eine Datenaustauscheinrichtung 8 einer Recheneinrichtung 7 zugeführt. Die Recheneinrichtung 7 ermittelt aus den Eingangsdaten Ausgangssignale, die über die Datenaustauscheinrichtung 8 an eine Ausgangsschaltung 11 weitergegeben werden. Weiterhin verfügt die Geschwindigkeitsregelvorrichtung 1 über eine Speichereinrichtung 9, die über ein Datenaustauschsystem 10 mit der Recheneinrichtung kommunizieren kann. Alternativ kann auch vorgesehen sein, dass die Datenaustauscheinrichtung 8 sowie die Datenaustauscheinrichtung 10 als ein einziges Datenaustauschsystem ausgeführt ist, an das alle Komponenten angeschlossen sind. In der Speichereinrichtung 9 sind vorteilhafterweise verschiedene Fahrprogramme abgespeichert, die je nach Wahl der Zeitlücke mittels des Bedienelementes 5 über die Datenaustauscheinrichtung 10 in das Rechengerät 7 übertragen werden können. Durch eine Veränderung der Zeitlücke mittels der Bedieneinrichtung 5 ist es damit möglich, dass das Rechengerät 7, das aus den Eingangssignalen Stellsignale für Vortriebs- und Verzögerungseinrichtungen 12, 14 des Fahrzeugs ermittelt, ein geeignetes Fahrprogramm aus dem Speicher 9 übernimmt. Das gewählte Fahrprogramm entspricht damit einer Längsdynamikcharakteristik, die der gewählten Zeitlücke entspricht. Wünscht der Fahrer ein sportlich-dynamisches Fahrverhalten, so wählt er mittels der Bedieneinrichtung 5 eine kleine Zeitlücke, und es wird ein Fahrprogramm vom Speicher 9 in die Recheneinrichtung 7 übernommen, das beispielsweise höhere Beschleunigungs- und Verzögerungswerte durch den Geschwindigkeitsregler zulässt, als bei Zeitlücken mit größerem Abstand. Ebenso ist es möglich, die Fahrprogramme dahingehend auszulegen, dass bei einer kurzen Zeitlücke, die einem sportlichen Fahrprogramm entspricht, die Verzögerungseinrichtungen des Fahrzeugs erst bei einem geringeren Abstand zum vorausfahrenden Fahrzeug aktiviert werden, als bei einem komfortablen und sicherheitsbewussten Fahrprogramm, das einer längeren Zeitlücke entspricht. Die in Abhängigkeit der zugeführten Objektdaten 4 und des ausgewählten Fahrprogramms ermittelten Stellsignale, werden über die Datenaustauscheinrichtung 8 an eine Ausgangsschaltung 11 ausgegeben, die an ein leistungsbestimmendes Stellelement einer Brennkraftmaschine 12 eine Beschleunigungsanforderung oder eine Momentenanforderung 13 ausgibt. Das leistungsbestimmende Stellelement 12 kann beispielsweise als elektrisch betätigte Drosselklappe ausgeführt sein oder als Kraftstoffmengenzumesseinrichtung in Form eines Kraftstoffinjektors für eine Brennkraftmaschine. Ebenfalls gibt die Ausgangsschaltung 10 ein Verzögerungssignal 15 an die Verzögerungseinrichtungen 14 des Fahrzeugs aus, für den Fall, dass das Fahrzeug die eigene Geschwindigkeit verringern muss. Die Verzögerungseinrichtungen 14 des Fahrzeugs sind vorteilhafterweise als elektrisch ansteuerbare Bremssysteme ausgebildet. Durch die beschriebene Vorrichtung wird dem Fahrer ermöglicht, über ein einfach handhabbares Bedienelement 5 die Fahrdynamik des Geschwindigkeitsreglers 1 so zu verändern, wie es seinem Fahrwunsch entgegenkommt. Dadurch wird dem Fahrer ein transparentes Bedienkonzept für einen adaptiven Geschwindigkeits- und Abstandsregler zur Verfügung gestellt, der ohne großen Aufwand den Wünschen des Fahrers anpassbar ist. Hierdurch wird ein einfach zu bedienendes System erreicht, was die Transparenz des Reglers sowie die Akzeptanz durch den Fahrer erhöht.

## Patentansprüche

1. Vorrichtung zur Geschwindigkeitsregelung (1) eines Kraftfahrzeugs im Sinne einer Konstantabstandsregelung falls mittels eines Radarsensors (3) mindestens ein vorherfahrendes Fahrzeug detektiert wurde oder im Sinne einer Konstantgeschwindigkeitsregelung falls mittels eines Radarsensors (3) kein vorherfahrendes Fahrzeug detektiert wurde wobei der Abstand zum vorherfahrenden Fahrzeug in Form einer Zeitlücke durch den Fahrer einstellbar ist, wobei bei Veränderung der Zeitlücke die Längsdynamik der Geschwindigkeitsregelung veränderbar ist, **dadurch gekennzeichnet, dass** in einer Speichereinrichtung (9) verschiedene Fahrprogramme abgelegt sind, wobei eine Recheneinrichtung (7) ein geeignetes Fahrprogramm mit einer Längsdynamikcharakteristik, die der gewählten Zeitlücke entspricht und die Fahrdynamik der Geschwindigkeitsregelvorrichtung (1) festlegt, aus der Speichereinrichtung (9) entnimmt.

2. Vorrichtung nach Anspruch 1, **dadurch gekennzeichnet, dass** bei einer Verringerung der Zeitlücke die von der Geschwindigkeitsregelvorrichtung (1) durchführbare, maximal mögliche Fahrzeugbeschleunigung und/oder Fahrzeugverzögerung erhöht wird.

3. Vorrichtung nach einem der Ansprüche 1 bis 2, **dadurch gekennzeichnet, dass** bei einer Verringerung der Zeitlücke die Aktivierung der Verzögerungseinrichtungen (14) des Fahrzeugs erst bei einem geringerem Abstand zum vorausfahrenden Fahrzeug erfolgt.

4. Verfahren zur Geschwindigkeitsregelung eines Kraftfahrzeugs im Sinne einer Konstantabstandsregelung falls mittels eines Radarsensors (3) mindestens ein vorherfahrendes Fahrzeug detektiert wurde oder im Sinne einer Konstantgeschwindigkeitsregelung falls mittels eines Radarsensors (3) kein vorherfahrendes Fahrzeug detektiert wurde wobei der Abstand zum vorherfahrenden Fahrzeug in Form einer Zeitlücke durch den Fahrer einstellbar ist, wobei bei Veränderung der Zeitlücke die Längsdynamik der Geschwindigkeitsregelung veränderbar ist, **dadurch gekennzeichnet, dass** in einer Speichereinrichtung (9) verschiedene Fahrprogramme abgelegt werden, wobei durch eine Recheneinrichtung (7) ein geeignetes Fahrprogramm mit einer Längsdynamikcharakteristik, die der gewählten Zeitlücke entspricht und die Fahrdynamik der Geschwindigkeitsregelvorrichtung (1) festlegt, aus der Speichereinrichtung (9) entnommen wird.

## Claims

1. Cruise control device (1) for a motor vehicle for keeping the distance between vehicles constant if at least one vehicle travelling ahead has been detected by means of a radar sensor (3), or for keeping the speed constant if no vehicle travelling ahead has been detected by means of a radar sensor (3), wherein the distance from the vehicle travelling ahead can be set in the form of a time interval by the driver, wherein, on the time interval changes, the longitudinal dynamics of the speed control can be varied, **characterized in that** various driving programs are stored in a memory device (9), wherein a computing device (7) extracts from the memory device (9) a suitable driving program with a longitudinal dynamics characteristic which corresponds to the selected time interval and determines the driving dynamics of the cruise control device (1).

2. Device according to Claim 1, **characterized in that** when the time interval is reduced, the maximum possible vehicle acceleration and/or vehicle deceleration which can be carried out by the cruise control device (1) is increased.

3. Device according to one of Claims 1 to 2, **characterized in that** when the time interval is reduced, the activation of the deceleration device (14) of the vehicle does not take place until there is a relatively small distance from the vehicle travelling ahead.

4. Cruise control method for a motor vehicle for keeping the distance between vehicles constant if at least one vehicle travelling ahead has been detected by means of a radar sensor (3), or for keeping the speed constant if no vehicle travelling ahead has been detected by means of a radar sensor (3), wherein the distance from the vehicle travelling ahead can be set in the form of a time interval by the driver, wherein, on the time interval changes, the longitudinal dynamics of the speed control can be varied, **characterized in that** various driving programs are stored in a memory device (9), wherein a computing device (7) extracts from the memory device (9) a suitable driving program with a longitudinal dynamics characteristic which corresponds to the selected time interval and determines the driving dynamics of the cruise control device (1).

## Revendications

1. Dispositif (1) de régulation de vitesse dans le sens de la constance de la distance au cas où au moins un véhicule se déplaçant en avant a été détecté au moyen d'un détecteur radar (3) ou dans le sens d'une régulation de la constance de la vitesse au cas où aucun véhicule se déplaçant en avant du véhicule n'a été détecté au moyen d'un détecteur radar (3),
la distance par rapport au véhicule se déplaçant en avant pouvant être réglée par le conducteur sous la forme d'un intervalle de temps et la dynamique longitudinale de la régulation de vitesse pouvant être modifiée en cas de modification de l'intervalle de temps,
**caractérisé en ce que**
différents programmes de conduite sont conservés dans un dispositif de mémoire (9),
**en ce qu'**une unité de calcul (7) reçoit du dispositif de mémoire (9) un programme de conduite approprié dont la caractéristique de dynamique longitudinale correspond à l'intervalle de temps sélectionné et définit la dynamique de conduite du dispositif (1) de régulation de vitesse.

2. Dispositif selon la revendication 1, **caractérisé en ce qu'**en cas de diminution de l'intervalle de temps, l'accélération maximale possible du véhicule et/ou le ralentissement du véhicule que peut exécuter le dispositif (1) de régulation de vitesse sont augmentés.

3. Dispositif selon l'une des revendications 1 et 2, **caractérisé en ce qu'**en cas de diminution de l'intervalle de temps, l'activation des dispositifs (14) de ralentissement du véhicule ne s'effectue que si la distance par rapport au véhicule se déplaçant en avant est petite.

4. Procédé de régulation de vitesse dans le sens de la constance de la distance au cas où au moins un véhicule se déplaçant en avant a été détecté au moyen d'un détecteur radar (3) ou dans le sens d'une régulation de la constance de la vitesse au cas où aucun véhicule se déplaçant en avant du véhicule n'a été détecté au moyen d'un détecteur radar (3),
**caractérisé en ce que**
différents programmes de conduite sont conservés dans un dispositif de mémoire (9),
**en ce qu'**une unité de calcul (7) reçoit du dispositif de mémoire (9) un programme de conduite approprié dont la caractéristique de dynamique longitudinale correspond à l'intervalle de temps sélectionné et définit la dynamique de conduite du dispositif (1) de régulation de vitesse.
